# EUROPEAN PATENT SPECIFICATION

(11) **EP 2 336 029 B1**
(45) Date of publication and mention of the grant of the patent: **10.05.2017**
(21) Application number: 09813962.9
(22) Date of filing: 21.08.2009
(51) Int. Cl.: B64F 1/06

(54) **COLD-LAUNCH METHOD AND APPARATUS THEREOF**
KALTSTARTVERFAHREN UND GERÄT DAFÜR
PROCÉDÉ DE LANCEMENT À FROID ET APPAREIL CORRESPONDANT

(30) Priority: 19.09.2008 CN 200810143241
(43) Date of publication of application: 22.06.2011
(73) Proprietor: Hu, Xuanzhe, Zhuzhou, Hunan 412008 (CN)
(72) Inventor: HU, Zhenhua, Hunan 412008 (CN); HU, Aiwu, Hunan 412008 (CN)
(74) Representative: Hryszkiewicz, Danuta
(86) International application number: PCT/CN2009/000963
(87) International publication number: WO 2010/031241

(56) References cited:
- CN-A- 101 195 414
- CN-A- 101 244 764
- CN-A- 101 314 410
- CN-Y- 2 362 688
- DE-C- 485 628
- DE-C- 562 687
- GB-A- 327 101
- GB-A- 357 694
- GB-A- 1 473 089
- US-A- 1 802 649
- US-A- 4 079 901
- US-A1- 2007 084 965
- US-B1- 6 536 708

## Description

The invention relates to a cold-launch method and a device thereof in engineering mechanics, and more particularly to a cold-launch method and a device thereof in a cold state in which the device is completely closed that can be widely used for aircraft carriers, torpedoes, missiles, accident rescue, destroyed airports, cave storages, offshore drilling platforms, connection between islands, and so on. An example is found in document GB 327 101.

Launching devices are key components for aircraft carriers, and USA has the top technology thereof. Since the existing launching devices have the following problems, real and effective launching methods have not been found yet, and thus becoming a worldwide problem:

A steam-driven launch system used in USA is too big, complex, expensive, and difficult for production and maintenance, and efficiency thereof is only 4 - 6%, which makes it unsuitable for launching of bigger aircrafts, and development thereof has reached a limit.

An electromagnetic aircraft launch system (EMALS) developed in USA now uses a forced power storage and a linear motor technologies, disadvantages thereof comprise: 1) forced power storage is not good; the EMALS uses a flywheel (namely a rotor) featuring big difficulty in forced power storage, a small flywheel has no effect since it is unstable as a rotating speed thereof is high; if a large flywheel is to be used, on-board conditions do not allow it, and coupling between power storage and carriers cannot be implemented, in view of these, multiple disk generator integrating flywheel motors and generators are disposed on a frame pair by pair. By reverse rotating at a high speed, and each rotor stores limited energy. During war preparation, these disk generators have to be started first, and launching energy can be obtained, which causes exposure of positions, and missing of combatant opportunity. During the war preparation, average power for supplying power is high up to 6.35 MW, and only approximately 20% of storage energy within a peak range is used in two to three seconds of launching except for some storage energy used for forcing the device to wear and tear (produce harmful work) at a speed of 6400 rpm. Moreover, during the launching process, loss of a stator of the linear motor, heat loss of a circulatory frequency converter, and loss of the disk generator lead to very low overall efficiency during the war preparation, even if momentary efficiency of the EMALS during the launching process can be high up to 60%; 2) there are too many intermediate devices, since a launching speed required by an aircraft carrier can not be reached via a movement speed of a magnetic field of the linear generator, and the EMALS can only be used if frequency and voltage are increased via a high-power electronic device is used, which increases cost. USA have spent 28 years and 32 billion US dollars on the EMALS, but the EMALS have not been used on the aircraft carrier yet; 3) it features large electromagnetic interference, which affects application of high-sensitivity aircrafts and guidance systems; 4) it uses eddy-current and phase-shift brake, which is not safe enough; 5) since weapon performance is affected, it cannot facilitate timely and selective launch in extreme conditions, such as emergent events, severe sea condition, and so on, large size thereof greatly affects the number of shipboard aircrafts, and heavy height greatly affects stability and righting moment of ships. In view of these, it is required to find an effective launching method of an aircraft carrier.

In view of the above-described problem, it is one objective of the invention to provide a cold-launch method and a device thereof that is capable of addressing the above-mentioned problems with the conventional launching device of an aircraft carrier, breaking the bottleneck of forced power storage, and facilitating high freedom of collecting energy, a fast launching speed, effective transmission of large energy with constant power, high effective launching, simple structure, small size, light weight, easy production, low power consumption, and good adaptability.

The invention is as follows:
A cold-launch method of the invention comprises: providing a cold-launch device, the cold-launch device comprising a high-energy gas resource, a gas cylinder, a control valve, multiple pistons, a gas-liquid mixing cylinder, and a shuttle vehicle for carrying an aircraft, in which the high-energy gas resource is connected to the gas cylinder whereby supplying a high-energy gas thereto, enabling the high-energy gas in the gas cylinder to enter the gas-liquid mixing cylinder via the control valve, pushing all of the pistons and the shuttle vehicle, and launching the aircraft at a constant power. The cold-launch device further comprises a launching energy recovery device comprising a buffer spring, an energy recovery pump, a lifting cylinder, a sensor, a stop cylinder, and a guide rail; in which the energy recovery pump and the lifting cylinder are disposed on the shuttle vehicle; the shuttle vehicle is disposed on the guide rail; and the sensor and the stop cylinder are disposed in the front of the guide rail. The gas-liquid mixing cylinder comprises a first cavity and a second cavity; the multiple pistons are sequentially connected to one another and are disposed in the second cavity of the gas-liquid mixing cylinder; an oil outlet is disposed on a wall of each of the multiple pistons except for the last of the multiple pistons. Hydraulic oil is disposed in the second cavity; and the last of the multiple pistons is connected to the shuttle vehicle. The step of pushing all of the multiple pistons and the shuttle vehicle is performed by enabling the high-energy gas to push the first of the multiple pistons, enabling the hydraulic oil to flow in the second cavity via the oil outlet to sequentially push the multiple pistons, and enabling the last of the multiple pistons to push the shuttle vehicle. The step of launching the aircraft at a constant power is performed by unloading the gas-liquid cylinder by means of the control valve and resetting the shuttle vehicle by the buffer spring.

A cold-launch device, comprising a high-energy gas resource, a gas cylinder, a control valve, a shuttle vehicle for carrying an aircraft, and a gas-liquid mixing cylinder, the high-energy gas resource is connected to the gas cylinder whereby supplying energy thereto. The cold-launch device further comprises a launching energy recovery device comprising a buffer spring, an energy recovery pump, a lifting cylinder, a sensor, a stop cylinder, and a guide rail; in which the energy recovery pump and the lifting cylinder are disposed on the shuttle vehicle; the shuttle vehicle is disposed on the guide rail; and the sensor and the stop cylinder are disposed in the front of the guide rail. A first cavity is disposed in one end of an inner cavity of the gas-liquid mixing cylinder; and a second cavity is disposed in the other end of the inner cavity of the gas-liquid mixing cylinder. The gas cylinder is connected to the first cavity via the control valve and a connecting pipe, a gas port is disposed on a wall of the first cavity and the first cavity receives the high-energy gas from the gas cylinder via the gas port. Multiple pistons are sequentially connected to one another and are disposed in the second cavity; and the last of the multiple pistons is connected to the shuttle vehicle. An oil outlet is disposed on a wall of each of the multiple pistons except for the last of the multiple pistons; and hydraulic oil is disposed in the second cavity.

During operation, the high-energy gas in the gas cylinder enters the first cavity via the gas port of the gas-liquid mixing cylinder whereby pushing the first-stage piston to move forward. As the first-stage piston moves on, hydraulic oil in a cylinder of the first-stage piston enters a cavity of the second-stage piston whereby pushing the second-stage piston to move forward.

As the second-stage piston moves on, hydraulic oil in a cylinder of the second-stage piston enters a cavity of the third-stage piston whereby pushing the third-stage piston to move forward, ..., and so on, until the nth-stage piston is pushed to move forward whereby implementing long-distance and high-effective transmission and launching with constant power.

A head of the energy recovery pump is aligned with the stop cylinder whereby absorbing inertia energy of a launching system and transforming the inertia energy into hydraulic energy, an output end of the energy recovery pump is connected to the lifting cylinder via a pipe, and the front of the lifting cylinder is connected to the aircraft. The lifting cylinder again transforms hydraulic energy into mechanic energy whereby forcing an aircraft to fly semi-autonomously.

The buffer spring is disposed in each of the energy recovery pump, the lifting cylinder, and the stop cylinder, and a damping hole is disposed on a piston of the stop cylinder.

Another launching energy recovery device of the invention comprises an energy recovery pump, a lifting cylinder, a guide rail, a flexible rail, a shuttle vehicle, and a sensor, the flexible rail is hinged to the front of the guide rail, the shuttle vehicle operating as a carrier for an aircraft is disposed on the guide rail, the sensor and the energy recovery pump are disposed in the front of the flexible rail, an output end of the energy recovery pump is connected to the lifting cylinder via a pipe, and the top of the lifting cylinder is connected to the flexible rail.

A buffer spring is disposed in each of the energy recovery pump and the lifting cylinder.

The high-energy gas resource comprises pressure gas or steam, or a small air compressor, and the device stops operating as the high-energy gas in the gas cylinder meets a launching condition, and enters a cold state in which it is completely closed.

### Technique principle

It has been found from a pneumatic fast shore developed in 1950s, and accumulation of different patents of fast equipments, that an effective launching method for an aircraft carrier is to use a gas-liquid mixing launching device, which adequately indicates elasticity of gases and large volume of hydraulic energy, and is suitable for operating as a launching device of the aircraft carrier. By suddenly releasing collected power with an elastomer, different requirements of various launching devices for launching speeds can be met, which solves a problem of long-distance and high-effective transmission with constant power under great energy via hydraulic transmission. Launching can be facilitated with collected energy, and thus no preparation time is required, which facilitates surprise effect, and makes it possible to win quietly.

### Operation principle

The first cavity operating to receive high-energy gas is referred to as a gas receiving terminal, the gas-liquid mixing cylinder with the second cavity filled with hydraulic oil (referred to as a liquid receiving terminal) operates as a main part for launching. The gas cylinder is used, the control valve operates as a switch, and the pipe is used for connecting them whereby forming a main launching system. During operation, the high-energy gas resource stores enough high-energy gas in the gas cylinder according to a launching condition, and then stops operation. The launching device is always in a standby state as it is completely closed. During a war, as the launching device is in a cold state in which it is completely closed, no extra preparation time is required, the control valve opens the gas cylinder so that part of high-energy gas enters the gas receiving terminal of the gas-liquid mixing cylinder, the high-energy gas releases energy, pushes the piston to move forward, and compresses the hydraulic oil in a loop-shaped part between the cylinder and the piston so that it flows into a cavity of a piston in the next stage via the gas port, whereby pushing the piston and the shuttle vehicle to pull a plane to cold launch at a high speed and a constant power along the guide rail (comprising a shipboard aircraft), and thus cold launching
is facilitated.

There are many launching energy recovery devices, one of which is: the energy recovery pump and the lifting cylinder connected via the pipe and both having the buffer spring are disposed on the shuttle vehicle operating as a carrier for an aircraft. The head of the energy recovery pump is aligned with the stop cylinder, the front of the lifting cylinder is connected to the plane, and the sensor, and the stop cylinder with the damping hole and the buffer spring are disposed in the front of the guide rail. Every time as the launching device for pulling the plane is to enter a damping state, the sensor immediately sends a signal and controls the control valve to switch whereby opening the gas-liquid mixing cylinder for unloading. Then, the energy recovery pump having the head aligned with the stop cylinder is driven by great inertia energy of the launching system, collides with the stop cylinder, and pumps out pressure oil whereby transforming inertia energy into hydraulic energy. The pressure oil then enters the lifting cylinder via the connecting pipe, and thus the hydraulic energy is transformed into mechanical energy, which drives the aircraft to sprint and semi-autonomously take off at an approximate elevation angle. After that, the buffer springs in the stop cylinder, the energy recovery pump, and the lifting cylinder simultaneously release energy, and reset the stop cylinder, the energy recovery pump, and the lifting cylinder and the shuttle vehicle for the next launching.

Another launching energy recovery device is: it comprises a guide rail, a flexible rail, an energy recovery pump, a lifting cylinder, a shuttle vehicle, and a sensor, the flexible rail is hinged to the front of the guide rail, the sensor and the energy recovery pump are disposed in the front of the flexible rail, the top of the lifting cylinder is connected to the flexible rail, the shuttle vehicle operating as a carrier for an aircraft is disposed on the guide rail. As the shuttle vehicle is to enter a damping state, the sensor immediately sends a signal and controls the control valve to switch whereby opening the gas-liquid mixing cylinder for unloading. Then, the shuttle vehicle is driven by great inertia energy, collides with the energy recovery pump, and pumps out pressure oil. The pressure oil then enters the lifting cylinder via the connecting pipe, and the lifting cylinder abuts against and elevates the flexible rail, which drives the aircraft to semi-autonomously take off at an approximate elevation angle.

### Prominent substantive features and notable progress

After testing via two principle prototypes, the invention is proved to have the following advantages:
1) since energy is supplied via gas, conventional forced energy storage is not required, and freedom of collecting energy is improved;
2) energy is suddenly reduced via elastomers, various launch speeds can be facilitated;
3) since hydraulic transmission is used, ultra-high efficient transmission of enormous energy can be facilitated;
4) the cold-launch device features simple structure, small size, light weight, easy production, and low cost, and requires small number of operators and repairmen;
5) the cold-launch device can make use of the best launch time, and overcomes problems caused by shipboard aircrafts that take off under severe sea condition, as prows descend, or at night;
6) since inertia energy is recovered, power consumption during launching and takeoff distance are greatly reduced, continuity of launch is improved, which make the invention applicable to various types of ships; and
7) the cold-launch device can launch aircrafts as being completely closed by surprise, whereby controlling air supremacy and winning a war quietly.
   FIG. **1** is a schematic view of a cold-launch device of a first exemplary embodiment of the invention;
   FIG. **2** is a cross-sectional view of a gas-liquid mixing cylinder; and
   FIG. **3** is a schematic view of a cold-launch device of a second exemplary embodiment of the invention;
      in the drawings, the following reference numbers are used:
      **1 -** gas-liquid mixing cylinder; **1-1 -** control valve; **1-2 -** oil outlet; **2 -** shuttle vehicle; **2-1 -** shipboard aircraft; **2-2 -** lifting cylinder; **2-3** - connecting pipe; **2-4** - energy recovery pump; **2-5** - guide rail; **2-6** - flexible rail; **3 -** stop cylinder; **3-1** - damping hole; **4 -** sensor; **5 -** high-energy gas resource; **6 -** gas cylinder; **7 -** gas port; **8 -** first cavity; **9 -** second cavity; **10 -** first-stage piston; **11 -** second-stage piston; **12 -** third-stage piston; **13 -** hydraulic oil; **14 -** cylinder body.

Specific embodiments of the invention will be given below in conjunction with accompanying drawings.

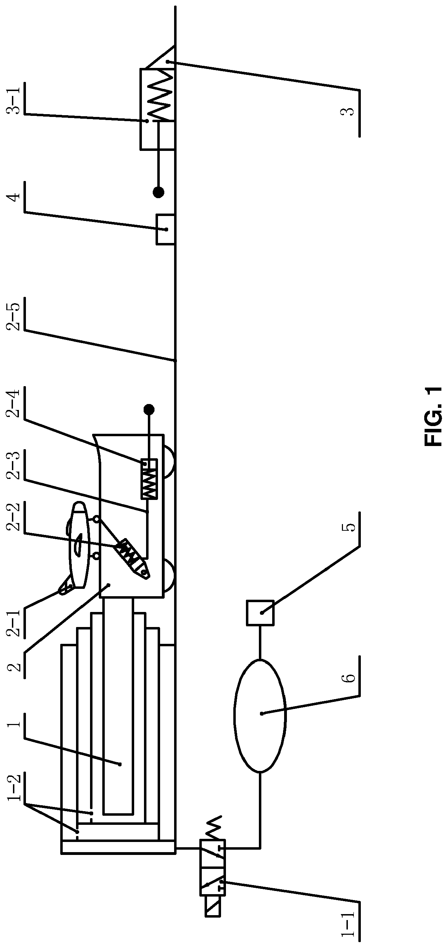

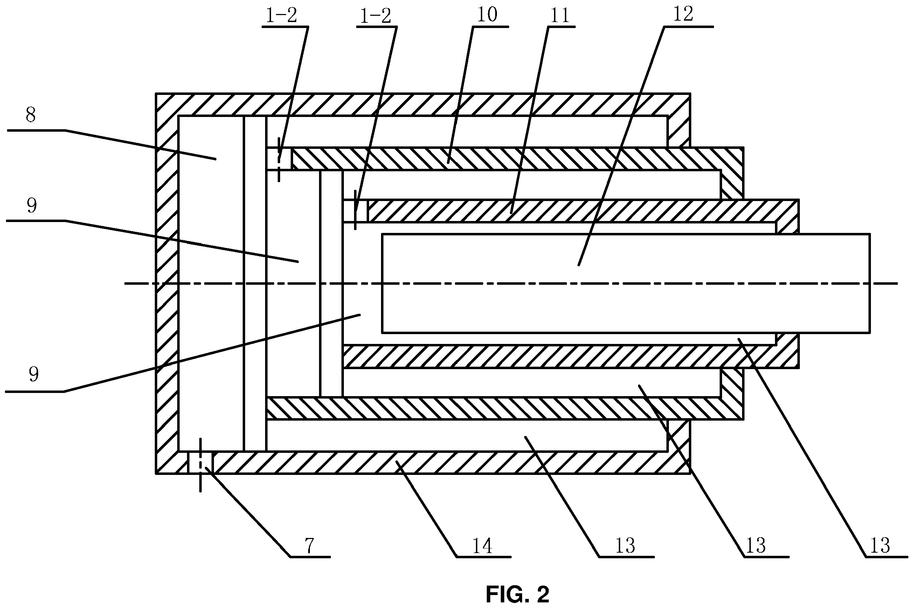

As shown in FIGS. **1** and **2****,** a cold-launch device of a first embodiment of the invention comprises a three-stage gas-liquid mixing cylinder **1,** a two-position three-way control valve **1-1,** a high-energy gas resource **5,** and a gas cylinder **6.** A buffer spring is disposed in each of an energy recovery pump **2-4,** a lifting cylinder **2-2,** and a stop cylinder **3.** A damping hole **3-1** is disposed on the stop cylinder **3.** In operation, after a certain launch condition is given, the high-energy gas resource **5** supplies high-energy gas to the gas cylinder **6** and then stops working. The launch device is always in a stand-by state as it is completely closed. During a war, the control valve **1-1** can be powered without any preparation time, and controls part of the high-energy gas in the gas cylinder **6** to enter the gas receiving terminal of the gas-liquid mixing cylinder **1** via a gas port **7** whereby driving a piston to move forwardly and compressing hydraulic oil in a loop-shaped part between a cylinder barrel and the piston. Then the hydraulic oil enters the next piston cylinder body via an oil outlet **1-2,** and drives the next-stage piston and a shuttle vehicle **2** to pull an aircraft **2-1** whereby enabling it to move along a guide rail **2-5** at a high speed with a constant power, and thus launch of the aircraft is implemented. Once the shuttle vehicle **2** pulling the aircraft **2-1** moves to a damping position, a sensor **4** sends a signal and automatically switches off a power supply of the two-position three-way control valve **1-1.** At this time the two-position three-way control valve **1-1** is reversed and unloads the gas-liquid mixing cylinder **1.** After that, the energy recovery pump **2-4** having a head aligned with the stop cylinder **3** is driven by inertia energy of the launch device, collides with the stop cylinder **3,** pumps out pressure oil, and transforms the inertia energy into hydraulic energy. The pressure oil then enters the lifting cylinder **2-2** via a connecting pipe **2-3,** and thus the hydraulic energy is transformed into mechanical energy, which drives the aircraft **2-1** to semi-autonomously take off at an appropriate elevation angle. Then, buffer springs in the energy recovery pump, the lifting cylinder, and the stop cylinder release energy and reset the energy recovery pump, the lifting cylinder, the stop cylinder., and the shuttle vehicle **2,** whereby preparing for the next launch.

As shown in FIG. **2****,** structure of the gas-liquid mixing cylinder **1** is: one end of an inner cavity of the cylinder body **14** is a first cavity **8,** a gas port **7** is disposed on wall of the first cavity **8,** and multiple stages of pistons are disposed in the cylinder body. Afirst-stage piston **10,** a second-stage piston **11,** and a third-stage piston **12** sequentially connected to each other are disposed in the second cavity **9.** Hydraulic oil **13** is filled in the second cavity **9.** An oil outlet **1-2** is disposed on each stage of the pistons.

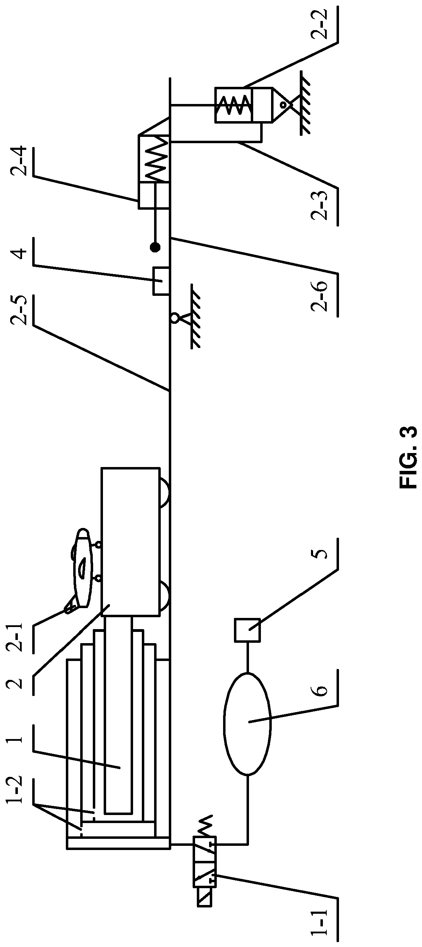

As shown in FIGS. **2** and **3****,** a launching energy recovery device of another embodiment of the invention comprises a guide rail **2-5,** a flexible rail **2-6,** an energy recovery pump **2-4,** a lifting cylinder **2-2,** a shuttle vehicle **2,** and a sensor **4,** a flexible rail **2-6** is hinged to the front of a guide rail **2-5,** the energy recovery pump **2-4** is disposed in the front of the flexible rail **2-6,** and the top of the lifting cylinder **2-2** is connected to the flexible rail **2-6.** Once the shuttle vehicle **2** pulling the aircraft **2-1** moves to a damping position, a sensor **4** sends a signal and automatically switches off a power supply of the two-position three-way control valve **1-1.** At this time the two-position three-way control valve **1-1** is reversed and unloads the gas-liquid mixing cylinder **1.** After that, the shuttle vehicle **2** driven by great inertia energy of the launch device collides with the energy recovery pump **2-4,** the energy recovery pump **2-4** pumps out pressure oil, and transforms the inertia energy into hydraulic energy. The pressure oil then enters the lifting cylinder **2-2** via a connecting pipe **2-3,** and thus the hydraulic energy is transformed into mechanical energy, which lifts the flexible rail **2-6** at an appropriate elevation angle, and drives the aircraft **2-1** to semi-autonomously take off.

The whole process is close-loop controlled via numerical control, and energy supplement does not occupy special time.

To summarize, it will be obvious to those skilled in the art that the invention can be applied to emission of torpedoes and missiles, accident rescue, destroyed airports, and connection between islands, and falls in the scope of the invention.

## Claims

1. A cold-launch method, comprising
providing a cold-launch device, the cold-launch device comprising a high-energy gas resource (5), a gas cylinder (6), a control valve (1-1), multiple pistons, a gas-liquid mixing cylinder (1), and a shuttle vehicle (2) for carrying an aircraft (2-1), wherein said high-energy gas resource (5) is connected to said gas cylinder (6) whereby supplying a high-energy gas thereto;
enabling said high-energy gas in said gas cylinder (6) to enter said gas-liquid mixing cylinder (1) via said control valve (1-1);
pushing all of said multiple pistons and said shuttle vehicle (2); and
launching the aircraft (2-1) at a constant power; wherein the cold-launch device further comprises a launching energy recovery device comprising a buffer spring, an energy recovery pump (2-4), a lifting cylinder (2-2), a sensor (4), a stop cylinder (3), and a guide rail (2-5); wherein said energy recovery pump (2-4) and said lifting cylinder (2-2) are disposed on said shuttle vehicle (2); said shuttle vehicle (2) is disposed on said guide rail (2-5); and said sensor (4) and said stop cylinder (3) are disposed in the front of said guide rail (2-5);
said gas-liquid mixing cylinder (1) comprises a first cavity (8) and a second cavity (9);
said multiple pistons are sequentially connected to one another and are disposed in said second cavity (9) of said gas-liquid mixing cylinder (1);
an oil outlet (1-2) is disposed on a wall of each of said multiple pistons except for the last of said multiple pistons;
hydraulic oil (13) is disposed in said second cavity (9);
the last of said multiple pistons is connected to said shuttle vehicle (2); and
the step of pushing all of said multiple pistons and said shuttle vehicle (2) is performed by enabling said high-energy gas to push said first of said multiple pistons, enabling said hydraulic oil (13) to flow in said second cavity (9) via said oil outlet (1-2) to sequentially push said multiple pistons, and enabling the last of said multiple pistons to push said shuttle vehicle (2); and
the step of launching the aircraft (2-1) at a constant power is performed by unloading said gas-liquid cylinder (1) by means of said control valve (1-1) and resetting said shuttle vehicle (2) by said buffer spring.

2. A cold-launch device, comprising
a high-energy gas resource (5);
a gas cylinder (6);
a control valve (1-1);
a shuttle vehicle (2) for carrying an aircraft (2-1); and
a gas-liquid mixing cylinder (1);
wherein said high-energy gas resource (5) is connected to said gas cylinder (6) whereby supplying a high-energy gas thereto; wherein the cold-launch device further comprises a launching energy recovery device comprising a buffer spring, an energy recovery pump (2-4), a lifting cylinder (2-2), a sensor (4), a stop cylinder (3), and a guide rail (2-5); wherein said energy recovery pump (2-4) and said lifting cylinder (2-2) are disposed on said shuttle vehicle (2); said shuttle vehicle (2) is disposed on said guide rail (2-5); and said sensor (4) and said stop cylinder (3) are disposed in the front of said guide rail (2-5);
a first cavity (8) is disposed in one end of an inner cavity of said gas-liquid mixing cylinder (1);
a second cavity (9) is disposed in the other end of said inner cavity of said gas-liquid mixing cylinder (1);
said gas cylinder (6) is connected to said first cavity (8) via said control valve (1-1) and a connecting pipe; a gas port (7) is disposed on a wall of said first cavity (8) and said first cavity (8) receives said high-energy gas from said gas cylinder (6) via said gas port (7);
multiple pistons are sequentially connected to one another and are disposed in said second cavity (9);
the last of said multiple pistons is connected to said shuttle vehicle (2);
an oil outlet (1-2) is disposed on a wall of each of said multiple pistons except for the last of said multiple pistons; and
hydraulic oil (13) is disposed in said second cavity (9).

3. The cold-launch device of claim 2, **characterized in that**
said high-energy gas resource (5) comprises pressure gas or steam, or a small air compressor.

## Patentansprüche

1. Kaltstartverfahren, umfassend
Vorsehen einer Kaltstartvorrichtung, wobei die Kaltstartvorrichtung eine hochenergetische Gasquelle (5), einen Gaszylinder (6), ein Steuerventil (1-1), mehrfache Kolben, einen Gas-Flüssigkeits-Mischzylinder (1) und ein Shuttlefahrzeug (2) zum Tragen eines Flugzeugs (2-1) umfasst, wobei die hochenergetische Gasquelle (5) mit dem Gaszylinder (6) verbunden ist, wodurch diesem ein hochenergetisches Gas zugeführt wird,
Ermöglichen, dass das hochenergetische Gas in dem Gaszylinder (6) über das Steuerventil (1-1) in den Gas-Flüssigkeits-Mischzylinder (1) eintritt,
Druckausüben auf alle der mehrfachen Kolben und Anschieben des Shuttlefahrzeugs (2), und
Starten des Flugzeugs (2-1) mit konstanter Leistung,
wobei
die Kaltstartvorrichtung ferner eine Vorrichtung zur Rückgewinnung der Startenergie umfasst, die eine Pufferfeder, eine Pumpe zur Energierückgewinnung (2-4), einen Hubzylinder (2-2), einen Sensor (4), einen Anschlagszylinder (3) und eine Führungsschiene (2-5) umfasst, wobei die Pumpe zur Energierückgewinnung (2-4) und der Hubzylinder (2-2) an dem Shuttlefahrzeug (2) angeordnet werden, das Shuttlefahrzeug (2) auf der Führungsschiene (2-5) angeordnet wird, und der Sensor (4) und der Anschlagszylinder (3) im Vorderteil der Führungsschiene (2-5) angeordnet werden,
der Gas-Flüssigkeits-Mischzylinder (1) einen ersten Hohlraum (8) und einen zweiten Hohlraum (9) umfasst,
die mehrfachen Kolben nacheinander miteinander verbunden und in dem zweiten Hohlraum (9) des Gas-Flüssigkeits-Mischzylinders (1) angeordnet werden,
ein Ölauslass (1-2) auf einer Wand von jedem der mehrfachen Kolben außer dem letzten der mehrfachen Kolben angeordnet wird,
Hydrauliköl (13) in dem zweiten Hohlraum (9) angeordnet wird,
der letzte der mehrfachen Kolben mit dem Shuttlefahrzeug (2) verbunden wird, und
der Schritt des Druckausübens auf alle der mehrfachen Kolben und des Anschiebens des Shuttlefahrzeugs (2) dadurch ausgeführt wird, dass ermöglicht wird, dass das hochenergetische Gas auf den ersten der mehrfachen Kolben Druck ausübt, wodurch das Hydrauliköl (13) über den Ölauslass (1-2) in den zweiten Hohlraum (9) fließen und nacheinander auf die mehrfachen Kolben Druck ausüben kann, und dass ermöglicht wird, dass der letzte der mehrfachen Kolben das Shuttlefahrzeug (2) anschiebt, und
der Schritt des Startens des Flugzeugs (2-1) mit konstanter Leistung dadurch ausgeführt wird, dass der Gas-Flüssigkeits-Zylinder (1) mittels des Steuerventils (1-1) entlastet wird, und das Shuttlefahrzeug (2) durch die Pufferfeder zurückgesetzt wird.

2. Kaltstartvorrichtung, umfassend
eine hochenergetische Gasquelle (5),
einen Gaszylinder (6),
ein Steuerventil (1-1),
ein Shuttlefahrzeug (2) zum Tragen eines Flugzeugs (2-1) und
einen Gas-Flüssigkeits-Mischzylinder (1),
wobei die hochenergetische Gasquelle (5) mit dem Gaszylinder (6) verbunden ist, wodurch diesem ein hochenergetisches Gas zugeführt wird,
wobei
die Kaltstartvorrichtung ferner eine Vorrichtung zur Rückgewinnung der Startenergie umfasst, die eine Pufferfeder, eine Pumpe zur Energierückgewinnung (2-4), einen Hubzylinder (2-2), einen Sensor (4), einen Anschlagszylinder (3) und eine Führungsschiene (2-5) umfasst, wobei die Pumpe zur Energierückgewinnung (2-4) und der Hubzylinder (2-2) an dem Shuttlefahrzeug (2) angeordnet sind, das Shuttlefahrzeug (2) auf der Führungsschiene (2-5) angeordnet ist, und der Sensor (4) und der Anschlagszylinder (3) im Vorderteil der Führungsschiene (2-5) angeordnet sind,
ein erster Hohlraum (8) an einem Ende eines inneren Hohlraums des Gas-Flüssigkeits-Mischzylinders (1) angeordnet ist,
ein zweiter Hohlraum (9) am anderen Ende des inneren Hohlraums des Gas-Flüssigkeits-Mischzylinders (1) angeordnet ist,
der Gaszylinder (6) über das Steuerventil (1-1) und ein Verbindungsrohr mit dem ersten Hohlraum (8) verbunden ist, ein Gasanschluss (7) auf einer Wand des ersten Hohlraums (8) angeordnet ist, und der erste Hohlraum (8) das hochenergetische Gas über den Gasanschluss (7) von dem Gaszylinder (6) erhält,
mehrfache Kolben nacheinander miteinander verbunden und in dem zweiten Hohlraum (9) angeordnet sind,
der letzte der mehrfachen Kolben mit dem Shuttlefahrzeug (2) verbunden ist,
ein Ölauslass (1-2) auf einer Wand von jedem der mehrfachen Kolben außer dem letzten der mehrfachen Kolben angeordnet ist, und
Hydrauliköl (13) in dem zweiten Hohlraum (9) angeordnet ist.

3. Kaltstartvorrichtung nach Anspruch 2, **dadurch gekennzeichnet, dass**
die hochenergetische Gasquelle (5) Druckgas oder -dampf oder einen kleinen Luftkompressor umfasst.

## Revendications

1. Procédé de lancement à froid, comprenant :
la fourniture d'un dispositif de lancement à froid, le dispositif de lancement à froid comprenant une ressource de gaz de haute énergie (5), une bouteille à gaz (6), une vanne de commande (1-1), de multiples pistons, un cylindre mélangeur de gaz-liquide (1) et une navette (2) pour acheminer un aéronef (2-1), dans lequel ladite ressource de gaz de haute énergie (5) est raccordée à ladite bouteille à gaz (6) en alimentant ainsi celle-ci avec un gaz de haute énergie ;
la permission audit gaz de haute énergie dans ladite bouteille à gaz (6) d'entrer dans ledit cylindre mélangeur de gaz-liquide (1) via ladite vanne de commande (1-1) ;
la poussée de la totalité desdits multiples pistons et de ladite navette (2) ; et
le lancement de l'aéronef (2-1) à une puissance constante ;
dans lequel le dispositif de lancement à froid comprend en outre un dispositif de récupération d'énergie de lancement comprenant un ressort tampon, une pompe de récupération d'énergie (2-4), un vérin de relevage (2-2), un capteur (4), un vérin d'arrêt (3) et un rail de guidage (2-5) ; dans lequel ladite pompe de récupération d'énergie (2-4) et ledit vérin de relevage (2-2) sont disposés sur ladite navette (2) ; ladite navette (2) étant disposée sur ledit rail de guidage (2-5) ; et ledit capteur (4) et ledit vérin d'arrêt (3) étant disposés à l'avant dudit rail de guidage (2-5) ;
ledit cylindre mélangeur de gaz-liquide (1) comprenant une première cavité (8) et une deuxième cavité (9) ;
lesdits multiples pistons étant raccordés séquentiellement les uns aux autres et étant disposés dans ladite deuxième cavité (9) dudit cylindre mélangeur de gaz-liquide (1) ;
une sortie d'huile (1-2) étant disposée sur une paroi de chacun desdits multiples pistons à l'exception du dernier desdits multiples pistons ;
de l'huile hydraulique (13) étant disposée dans ladite deuxième cavité (9) ;
le dernier desdits multiples pistons étant raccordé à ladite navette (2) ; et
l'étape consistant à pousser la totalité desdits multiples pistons et ladite navette (2) étant réalisée en permettant audit gaz de haute énergie de pousser ledit premier desdits multiples pistons, en permettant à ladite huile hydraulique (13) de s'écouler dans ladite deuxième cavité (9) via ladite sortie d'huile (1-2) pour séquentiellement pousser lesdits multiples pistons, et en permettant au dernier desdits multiples pistons de pousser ladite navette (2) ; et
l'étape de lancement de l'aéronef (2-1) à une puissance constante étant réalisée en déchargeant ledit cylindre de gaz-liquide (1) au moyen de ladite vanne de commande (1-1) et en réarmant ladite navette (2) grâce audit ressort tampon.

2. Dispositif de lancement à froid, comprenant :
une ressource de gaz de haute énergie (5) ;
une bouteille à gaz (6) ;
une vanne de commande (1-1) ;
une navette (2) pour acheminer un aéronef (2-1) ; et
un cylindre mélangeur de gaz-liquide (1) ;
dans lequel ladite ressource de gaz de haute énergie (5) est raccordée à ladite bouteille de gaz (6) en alimentant ainsi celle-ci avec un gaz de haute énergie ; dans lequel
le dispositif de lancement à froid comprend en outre un dispositif de récupération d'énergie de lancement comprenant un ressort tampon, une pompe de récupération d'énergie (2-4), un vérin de relevage (2-2), un capteur (4), un vérin d'arrêt (3) et un rail de guidage (2-5) ; dans lequel ladite pompe de récupération d'énergie (2-4) et ledit vérin de relevage (2-2) sont disposés sur ladite navette (2) ; ladite navette (2) étant disposée sur ledit rail de guidage (2-5) ; et ledit capteur (4) et ledit vérin d'arrêt (3) étant disposés à l'avant dudit rail de guidage (2-5) ;
une première cavité (8) étant disposée dans une extrémité d'une cavité interne dudit cylindre mélangeur de gaz-liquide (1) ;
une deuxième cavité (9) étant disposée dans l'autre extrémité de ladite cavité interne dudit cylindre mélangeur de gaz-liquide (1) ;
ladite bouteille à gaz (6) étant raccordée à ladite première cavité (8) via ladite vanne de commande (1-1) et un tube de raccordement ; un orifice de gaz (7) étant disposé sur une paroi de ladite première cavité (8), et ladite première cavité (8) recevant ledit gaz de haute énergie de ladite bouteille à gaz (6) via ledit orifice de gaz (7) ;
de multiples pistons étant raccordés séquentiellement les uns aux autres et étant disposés dans ladite deuxième cavité (9) ;
le dernier desdits multiples pistons étant raccordé à ladite navette (2) ;
une sortie d'huile (1-2) étant disposée sur une paroi de chacun desdits multiples pistons à l'exception du dernier desdits multiples pistons ; et
de l'huile hydraulique (13) étant disposée dans ladite deuxième cavité (9).

3. Dispositif de lancement à froid selon la revendication 2, **caractérisé en ce que** ladite ressource de gaz de haute énergie (5) comprend du gaz ou de la vapeur sous pression, ou un petit compresseur d'air.
